# EUROPEAN PATENT SPECIFICATION

(11) **EP 2 379 369 B1**
(45) Date of publication and mention of the grant of the patent: **26.02.2014**
(21) Application number: 08878966.4
(22) Date of filing: 17.12.2008
(51) Int. Cl.: B60P 1/64, B60P 7/13

(54) **CARRIER DEVICE FOR COUPLING DIFFERENT KINDS OF PAYLOAD BODIES**
TRÄGERVORRICHTUNG ZUR KOPPLUNG VERSCHIEDENER ARTEN VON NUTZLASTKÖRPERN
DISPOSITIF DE SUPPORT POUR COUPLER DIFFERENTS TYPES DE CORPS DE CHARGE UTILE

(43) Date of publication of application: 26.10.2011
(73) Proprietor: Volvo Lastvagnar AB, 405 08 Göteborg (SE)
(72) Inventor: REGNELL, Hans, SE-442 50 Ytterby (SE); KLASA, Christer, SE-446 95 Älvängen (SE); GUSTAFSSON, Jens, SE-431 36 Mölndal (SE)
(74) Representative: Fröhling, Werner Otto
(86) International application number: PCT/SE2008/000724
(87) International publication number: WO 2010/071490

(56) References cited:
- EP-A1- 1 300 285
- DE-A1- 19 618 594
- DE-A1-102008 017 417
- DE-U- 7 302 826
- DE-U- 7 333 060
- DE-U1- 9 205 891
- DE-U1- 20 016 559
- DE-U1- 29 606 845
- US-A- 3 924 544
- US-A- 3 924 544

## Description

### TECHNICAL FIELD

The invention relates to a carrier device and a mounting system for a commercial vehicle, particularly a truck or a semitrailer.

### BACKGROUND OF THE INVENTION

It is well known in the art to load commercial heavy transport vehicles, in particular trucks comprising a trailer or a semitrailer with payload bodies such as swap bodies or containers. Thereby, containers are loaded by means of a crane on carrier devices attached to a trailer, while swap bodies may be loaded either by a crane or by maneuvrizing the trailer beneath the swap body. When loaded onto the trailer, the payload body is fixed by means of locking members such as twist locks, which are well known in the art and which may be operated automatically for example by means of pneumatic devices.

In order to adjust the swap body precisely with respect to the trailer, the second option to load a swap body onto a trailer requires the provision of guiding members such as for example vertical rolls, which are attached to the trailer and engage a corresponding guiding channel provided with the swap body, while maneuvrizing the trailer beneath the swap body. Hence, loading at least two different kinds of payload bodies require different mechanical set-ups. Consequently, when loading a container onto a trailer, the guiding members need to be removed from the trailer. This is not only a dirty but also a hard work requiring a lot of muscular strength of the truck driver, which is in addition time-consuming. Above all, the vehicle and/or the payload body could be damaged during adjusting the mechanical set up.

There have been made several attempts to solve the above described problem. As an example, EP 1 300 285, A1 describes an assembly to hold and secure containers, to a truck chassis, has a lateral carrier which can be positioned as required by the container type along the longitudinal line of the chassis. The locking mechanism for the first container type has a locking pin held in a vertical, position at a swing arm to grip in a corner fitting of the container. The locking mechanism for a second type of container has an inserted bolt which, when in the holding position, grips horizontally in a container corner. A swing movement of the arms brings the second locking mechanism into a parked position while the second container type is held within the maximum rotating circle.

DE 200 16 559 U1 describes a trailer of a commercial vehicle such as a truck, which is provided with manually pivoting guiding members that are able to pivot 90° to allow loading both, containers and swap bodies. Additionally, DE 7302826 discloses guiding members, which are pivoting between a raised position where the guiding members are in operation to guide a swap body, and a lowered rest position to allow for a container to be loaded.

Another problem of loading different types of payload bodies onto a trailer is that the differences in the interfaces between the different types of payload bodies and the trailer do not only concern the guiding members but also the locking members. As an example, when loading a swap body by maneuvrizing the trailer beneath the swap body, the locking members being attached to the trailer must not protrude into the guideway of the swap body. Consequently, the switch of the mechanical set-up in order to perform different loading operations of different payload bodies still requires a manual intervention of the truck driver.

As seen from above, there is a need for further reducing the efforts that come along with the loading operation of different types of payload bodies.

### SUMMARY OF THE INVENTION

It is an object of the invention to provide a carrier device and a mounting system allowing for a simplified loading of different types of payload bodies.

The objects are achieved by the features of the independent claims. The other claims and the description disclose advantageous embodiments of the invention.

In accordance with the present invention there is provided a carrier device for a commercial vehicle, particularly a truck, a truck with a trailer or a semitrailer, for coupling different kinds of a payload body to the vehicle, wherein the carrier device provides
- one or more locking members for locking a first kind of the payload body and/or a second kind of the payload body;
- one or more guiding members engageable with the second kind of payload body, wherein the one or more locking members and the one or more guiding members are integrated in a device body;
- the one or more locking members and/or the one or more guiding members are automatically releasable into a released position and/or engageable into an engaging position depending on the kind of payload body to be loaded or being coupled to the vehicle; and
- the one or more guiding members are switchable from an engaging position for engaging the second kind of payload body to a released position for mounting the first kind of payload body and the one or more locking members are switchable from an engaging position for engaging the first kind of payload body and/or the second kind of payload body to a released position for mounting of the second kind of payload body.

Further, according to the invention, one of the one or more guiding members and one of the one or more locking members are arranged on a foldable arm which is selectively switchable to bring the guiding member into its engaging position and the locking member into its released position. This is advantageous as the arms may be folded down when loading a container onto the trailer, so that the guiding members do not interfere with the container and the locking members do not interfere with the swap body, respectively.

Additionally, according to the invention, one or more sensors are provided for detecting the kind of payload body provided for coupling to the vehicle. This is advantageous as a carrier device having a sensor for detecting the current type of payload body and thus the carrier device, in particular a computer unit of the carrier device will automatically change to the relevant adjustment of the guiding members and locking members. In this regard it is also possible to generate a warning signal for the driver, for example if the positioning of the respective payload body is erroneous.

The carrier device provides a quick and ergonomic change of the vehicle set-up and in particular an automatic control not only of the guiding members but also of-the locking members. The carrier device can preferably be operated by switches on the dashboard, which allows for performing all changes in the mechanical set-up of the vehicle without the need for the driver to step off the driving cab. It is thus possible that the vehicle may be adapted to load any kind of payload body without necessitating any manual operation of the truck driver accept activating switches.

According to a favourable embodiment according to the invention, the one or more locking members and/or the one or more guiding members are connected to one or more actuators of at least one of hydraulic kind, pneumatic kind, electric kind, for moving the one or more locking members and/or the one or more guiding members between the engaging position and the released position. This provides the advantage that all changes in the mechanical set-up may be performed automatically. For instance, the locking members may be operated by a hydraulic cylinder, and the guiding member may be operated by an air bellows.

According to a further favourable embodiment according to the invention, the one or more guiding members are positioned between the one or more locking members along a carrier-device body. Thereby, a compact entity is provided allowing for a simple mechanical set-up of the carrier device.

According to yet another favourable embodiment according to the invention, the foldable arm provides an articulated joint between the one of the one or more guiding members and the one of the one or more locking members. This allows for controlling a guiding member and a locking member independently from each other. It is thus possible to displace the guiding members into an engaging position and displace the locking members into a released position, if a swap body is to be loaded onto the container.

According to a further favourable embodiment according to the invention, after mounting the second kind of payload body the locking member is movable to its engaged position with the guiding member in its engaged position. Hence, the locking member may be displaced independent of the position of the guiding member.

According to a favourable embodiment according to the invention, the one or more locking members are provided for a locking container and/or a swap body and the one or more guiding members are provided for engaging with a swap body. Thus, the carrier device is adapted to interact with different kinds of payload bodies.

In accordance with the present invention there is further provided a mounting system comprising a carrier device for a commercial vehicle, particularly a truck, a truck with a trailer or a semitrailer, for coupling different kinds of a payload body to the vehicle, wherein a selecting device is coupled to the carrier device for automatically bringing one or more locking members for locking a first kind of the payload body and/or a second kind of the payload body and one or more guiding members engageable with the second kind of payload body into an engaging position and/or a released position depending on the kind of payload body to be coupled to the vehicle, wherein the one or more locking members and the one or more guiding members are integrated into a carrier-device body. The mounting system thus is flexible for different kinds of payload bodies.

According to a favourable embodiment according to the invention, switching of the one or more locking members and/or the one or more guiding members between engaging position and/or released position is performed according to a sensor signal detecting the actual kind of payload body. This is advantageous as a carrier device having a sensor for detecting the current type of payload body and thus the carrier device, in particular a computer unit of the carrier device will automatically change to the relevant adjustment of the guiding members and locking members. In this regard it is also possible to generate a warning signal for the driver, for example if the positioning of the respective payload body is erroneous.

According to a favourable embodiment according to the invention, a device is provided for activating switching by an operator of the one or more locking members and/or the one or more guiding members between engaging position and/or released position. The operator may for example be the truck driver, which may induce all changes in the mechanical set-up of the vehicle without the need for the driver to step off the driving cab. It is thus possible that the vehicle may be adapted to load any kind of payload body without necessitating any manual interference of the truck driver.

According to a favourable embodiment according to the invention, a height and/or an inclination of the vehicle is adapted depending on the kind of payload body provided for coupling to the vehicle. It is thus possible based on information about the leg heights of the swap body that the height of the vehicle and any desired inclination thereof to be automatically adjusted, for example by means of the air suspension of a hydraulic system. This will minimize the actions the driver has to take to accomplish loading and unloading of the payload body independently of the type of payload body.

### BRIEF DESCRIPTION OF THE DRAWINGS

The present invention together with the above-mentioned and other objects and advantages may best be understood from the following detailed description of the embodiments, but not restricted to the embodiments, wherein is shown:
- Fig. 1a-1d: a schematic view of a container to be loaded on a vehicle (Fig. 1a), a schematic view of a container loaded on a vehicle (Fig. 1 b), a schematic view of a swap body to be loaded on a vehicle (Fig. 1 c), a schematic view of a swap body loaded on a vehicle (Fig. 1d);
- Fig. 2a-2b: a schematic view of a container (Fig. 2a), a schematic view of a swap body (Fig. 2b);
- Fig. 3: a table of different functional positions of the carrier device;
- Fig. 4: a perspective sectional view of a carrier device in a first functional position;
- Fig. 5: a perspective sectional view of a carrier device in a second functional position:
- Fig: 6: a perspective view of a carrier device according to the invention.

### DETAILED DESCRIPTION OF PREFERRED EMBODIMENTS OF THE INVENTION

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

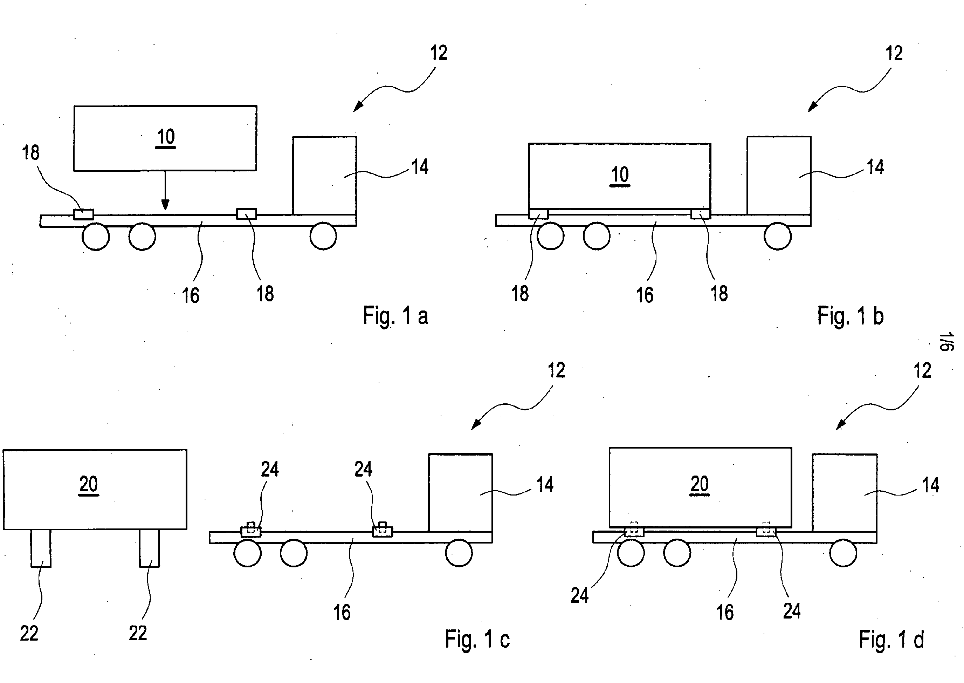

Fig. 1 a depicts schematically a view of a container 10, which is lifted by a not illustrated crane to be loaded on a vehicle 12, while Fig. 1b shows a schematic view of the container 10 in its final position on the vehicle 12. The vehicle 12 is preferably a commercial heavy load vehicle such as a truck and comprises a driving cab 14 and a trailer 16. Additionally, one or more semitrailers may be coupled to the trailer 16. The invention is also applicable to these semitrailers. The trailer 16 is provided with locking members 18 such as twist locks to fix the container tightly onto the trailer 16.
Fig. 1c depicts schematically a view of a swap body 20 and a vehicle 12, wherein the swap body 20 stands on legs 22. The vehicle 12 thus can be manoeuvred beneath the swap body 20 so that the swap body 20 is placed on the trailer 16 and the legs 22 be removed as shown in Fig. 1d. In order to position the swap body 20 precisely onto the vehicle 12, the trailer 16 need to be provided with guiding members 24. It is obvious that the guiding members 24 are needless when loading a container 10 onto a vehicle 12 as shown in Figs. 1a and 1b. Also the swap body 20 is fixed to the trailer 16 by means of locking members 18 not explicitly shown in
Figs. 1c and 1d. The same twist locks 18 can be used for both a container 10 and a swap body 20.

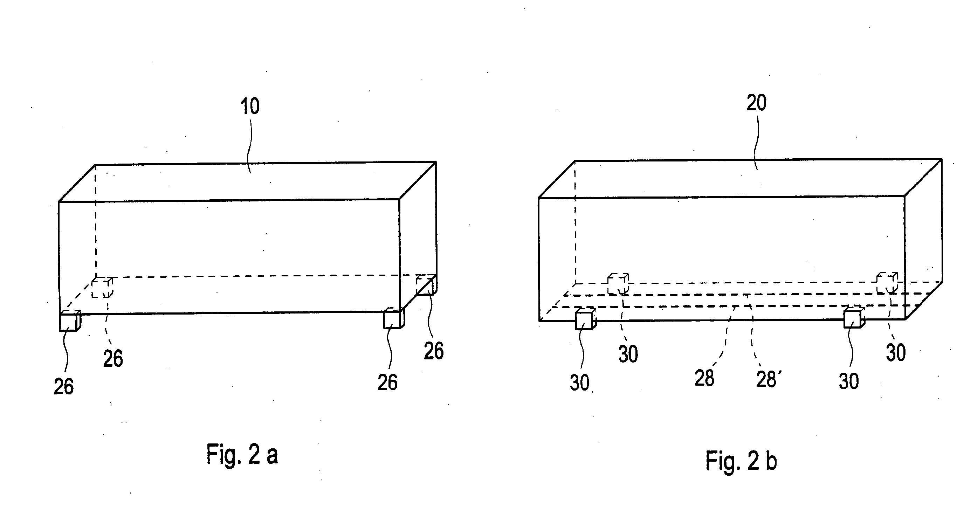

Fig. 2a and Fig. 2b point out the differences between the support structure of the container 10 and the support structure of the swap body 20. Whereas the container 10 is positioned on four primary support points 26 that are arranged in the corners of the container 10, the primary support section of the swap body 20 is formed by a guiding channel for receiving the guiding members, which is only indicated in Fig. 2b through lines 28 and 28'. Additionally, the swap body 20 comprises a secondary support, which is formed by four support points 30.

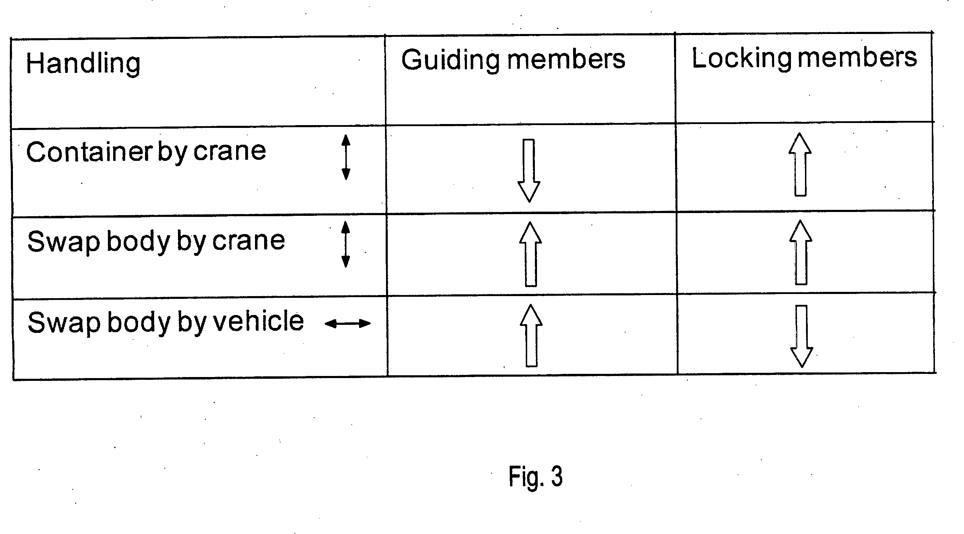

Fig. 3 shows a table of different functional positions of the locking members 18 and the guiding members 24 depending on the respective payload body to be loaded. The first column includes the type of handling of the respective payload body. For example, a container 10 is loaded by means of a crane (second row), whereas the swap body 20 may either be loaded by means of a crane (third row) or by maneuvrizing the vehicle 12 (fourth row). The second column of the table denotes the respective functional position of the guiding members 24 and the third column of the table denotes the respective functional position of the locking member 18.

As indicated by the arrows in the second row of the table, the guiding members 18 attached to the trailer 16 need to be arranged in a released position, while the locking members 24 need to be arranged in an engaging position, if a container 10 is to be loaded onto the trailer 16.

Furthermore, the arrows in the third row of the table indicate that the guiding members 24 need to be arranged in an engaging position, while the locking members 18 need also to be arranged in an engaging position, if a swap body 20 is to be loaded by crane onto the trailer 16.

Finally, the arrows in the fourth line of the table indicate that the guiding members 24 need to be arranged in an engaging position, while the locking members 18 need to be arranged in a released position, if a swap body 20 is to be loaded onto the trailer 16 by maneuvrizing the vehicle 12 beneath the swap body 20. The locking members 18 need to be arranged in a released position as they would otherwise protrude into the guiding path of the swap body 20.

As can be seen from Fig. 3, the position of the functional elements, in particular the guiding members 24 and the locking members 18 require to be arranged in different positions depending on the type of payload body to be loaded.

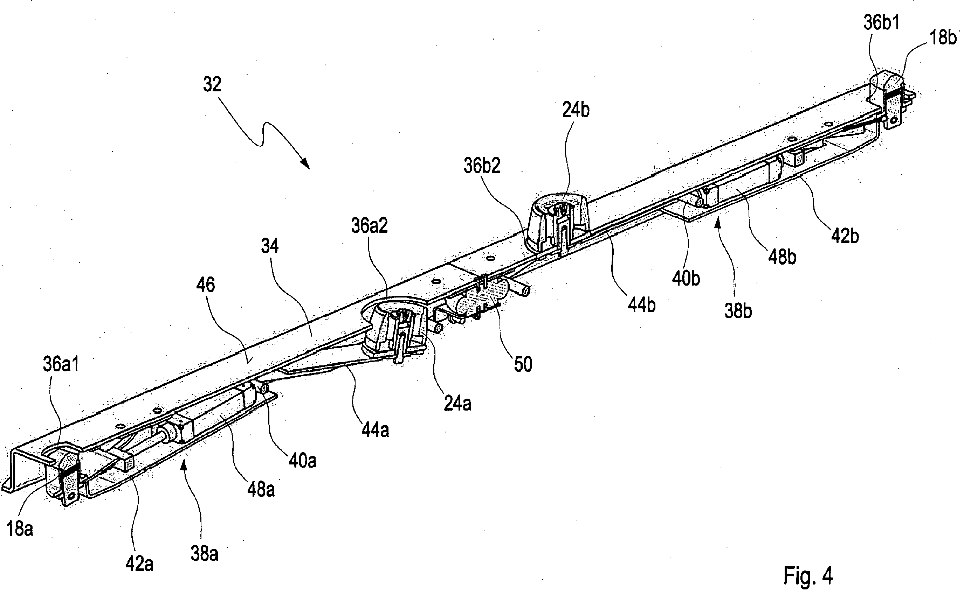

Fig. 4 shows a perspective sectional view of a carrier device 32 according to the invention, wherein the carrier device 32 comprises a carrier-device body 34 with openings 36a1, 36b1 and 36a2, 36b2. The carrier device 32 is preferably part of a mounting system, which will be explained in more detail hereinafter.

The carrier device 32 is adapted to be mounted on a trailer 16. Furthermore, the carrier-device body 34 is adapted to receive at least one foldable arm 38a, in particular two foldable arms 38a and 38b, wherein each of the foldable arms 38a, 38b comprises an articulated joint 40a, 40b connecting a first arm part 42a, 42b and a second arm part 44a, 44b movably to each other. The guiding members 24a, 24b are preferably positioned between the locking members 18a, 18b along the carrier-device body 34, when using two foldable arms 38a, 38b as shown in Fig. 4. Preferably, the foldable arms 38a, 38b are configured symmetrically to each other.

As can be seen from Fig. 4, a locking member 18a is positioned at the end of the first arm part 42a opposing the articulated joint 40a, whereas a locking member 24a, in particular a vertical roll, is positioned at the end of the second arm part 44a likewise opposing the articulated joint 40a. It is also possible to provide the foldable arm 38a, 38b with more than one locking member 18a, 18b and/or guiding member 24a, 24b.

By means of the foldable arms 38a, 38b the locking members 18a, 18b may thus be transferred through the openings 36a1, 36a2 and/or the guiding members 24a, 24b may thus be transferred through the openings 36a2, 36b2 in a raised position or in a lowered position, whereas the raised position corresponds to the engaging position and is characterized in that the respective member, i.e. the locking member 18a and/or the guiding member 24a are arranged above a virtual plane, in which the cover sheet 46 of the device body 34 is arranged and the lowered position corresponds to the released position and is characterized in that the respective member is arranged beneath said virtual plane. The guiding members 24a, 24b can be controlled by an actuator device 50, particularly an air bellows located between the guiding members 24a, 24b. The guiding members 24a, 24b can be operated between the lowered and the raised positions by e.g. a lever arm activatable by the air bellows.

The functional positions of the foldable arms 38a, 38b, i.e. the first and second arm parts 42a, 42b and thereby the locking members 18a, 18b, e.g. twist locks, may be controlled by an actuator 48a, 48b, which may be at least of hydraulic kind, pneumatic kind or electric kind or similar, for moving the locking member 18a, 18b between the engaging position and the released position.

The actuator 48a, 48b shown in Fig. 4 is exemplary of pneumatic kind and connected to the first and the second arm parts 42a, 42b. Also the tensioning of the locking members 18a, 18b may be operated pneumatically, so that a locking member 18a, 18b engaging a payload body such as a container 10 or a swap body 20 may be fixed automatically to the payload body. When activating the actuators 48a, 48b, a movement of the arm parts 42a, 42b is achieved, whereby the position of the locking members 18a, 18b is changed. Correspondingly, when activating the actuator device 50, a movement of the arm parts 44a, 44b is achieved whereby the position of the guiding members 24a, 24b is changed.

In Fig. 4, there are illustrated two different kinds of functional positions of the foldable arms 38a and 38b. Due to the functional position of foldable arm 38a, both, the locking member 18a as well as the guiding member 24a is positioned in a released position, whereas the locking member 18b and guiding member 24b of foldable arm 38b are arranged in their engaging position.

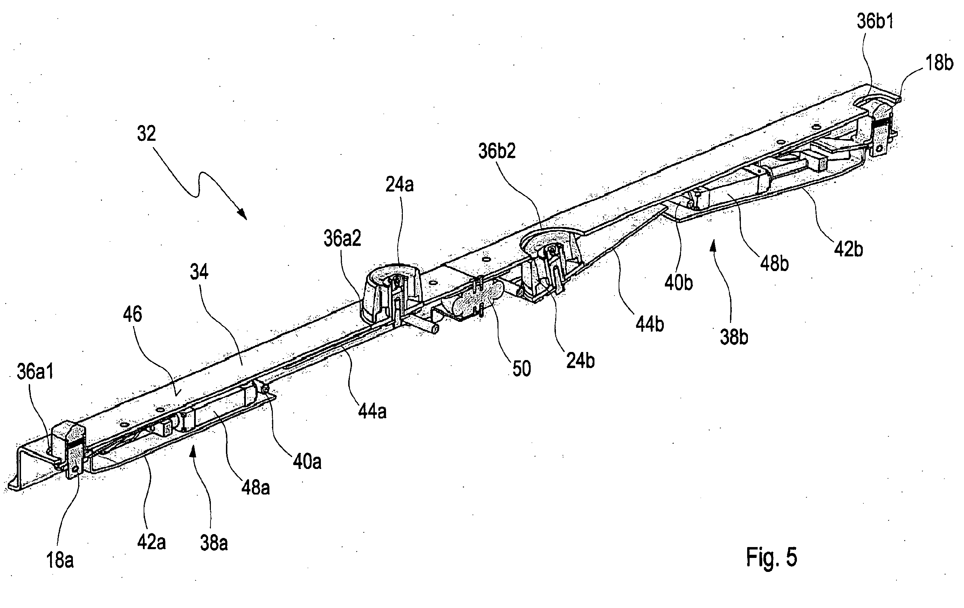

By contrast, the functional positions of the foldable arms 38a and 38b shown in Fig. 5 are as follows: the locking member 18a and the guiding member 24a of foldable arm 38a are in an engaging position, whereas the locking member 18b and guiding member 24b are in a released position.

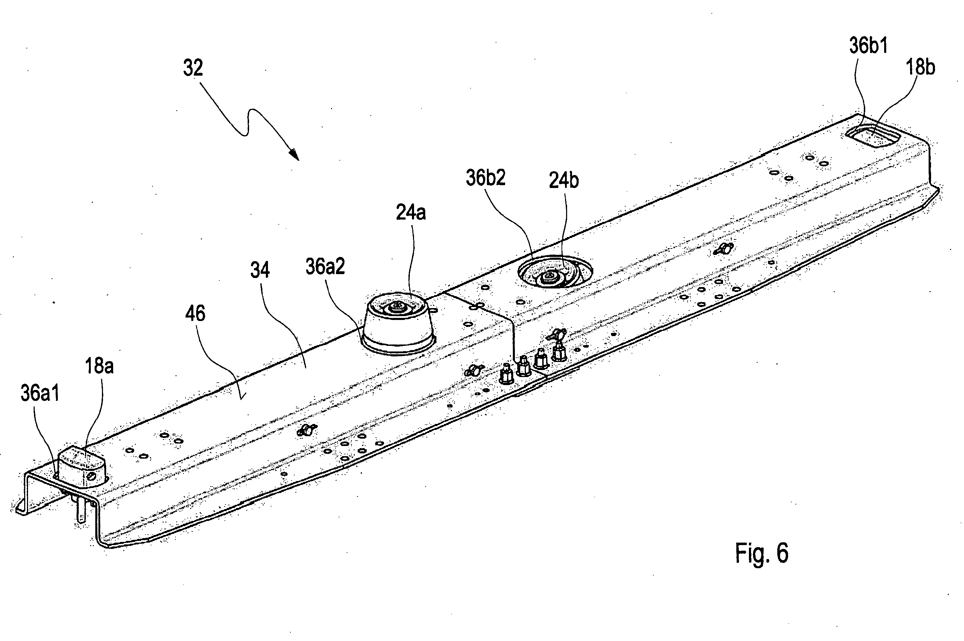

Fig. 6 shows a perspective view of a carrier device 32 according to the invention. The functional positions of the foldable arms 38a, 38b correspond to those shown in Fig. 5. Fig. 6, in combination with Figs. 1a-1b, makes clear that in the engaging position of the locking member 18a, 18b and the guiding member 24a, 24b, a swap body 20 which is to be loaded onto a trailer 16, is not able to pass the locking member 18a, 18b in its engaging position.

In order to realize the functional positions of the carrier device 32 as shown in Fig. 3, the arm parts 42a, 42b and 44a, 44b (Fig. 4, Fig. 5) are preferably separately switchable. Hence, it is possible to arrange the guiding members 24a, and/or 24b of the foldable arms 38a, 38b in an engaging position to engage the guiding channel of a swap body 20, whereas the locking members 18a and/or 18b are arranged in a released position to not interfere with the swap body 20 loaded by maneuvrizing a trailer 16 beneath the swap body 20. Only when the swap body 20 is in its final position on the vehicle 12, the locking members 18a, 18b may be displaced in their engaging position to fix the swap body onto the vehicle 12.

If a container 10 is to be loaded by means of a crane onto the vehicle 12, the locking means 18a, 18b of foldable arms 38a, 38b need to be arranged in their engaging position, whereas the guiding members 24a, 24b need to be arranged in their released position, as the guiding members 24a, 24b are not needed when loading a container 10 by means of a crane onto a vehicle 12.

If a swap body 20 is to be loaded onto a vehicle 12 by means of a crane, the locking members 18a, 18b of foldable arms 38a and 38b as well as the guiding members 24a, 24b of foldable arms 38a and 38b need to be in an engaging position in order to load the swap body 20 precisely onto the vehicle 12.

The carrier device 32 can preferably be operated by switches on the dashboard of the driving cab 14, which allows for performing all changes in the mechanical set-up of the vehicle 12 without the need for the driver to step off the driving cab 14. It is thus possible that the vehicle 12 may be adapted to load any kind of payload body without necessitating any manual operation of the truck driver. The driver mav identify the type of payload body to be loaded visually and activate the respective switch to change the mechanical set-up of the carrier device 32 accordingly.

Consequently, there is provided a carrier device 32 for a commercial vehicle 12, particularly a truck, a truck with a trailer 16 or a semitrailer, for coupling different kinds of a payload body to the vehicle 12, wherein the carrier device 32 provides
- one or more locking members 18a, 18b for locking a first kind of the payload body, namely a container 10 and/or a second kind of the payload body, namely a swap body 20;
- one or more guiding members 24a, 24b engageable with the second kind of payload body, wherein the one or more locking members 18a, 18b and the one or more guiding members 24a, 24b are integrated in a carrier-device body 34;
- the one or more locking members 18a, 18b and/or the one or more guiding members 24a, 24b are automatically releasable into a released position and/or engageable into an engaging position depending on the kind of payload body to be loaded or being coupled to the vehicle 12; and
- the one or more guiding members 24a, 24b are switchable from an engaging position for engaging the second kind of payload body to a released position for mounting the first kind of payload body and the one or more locking members 18a, 18b are switchable from an engaging position for engaging the first kind of payload body and/or the second kind of payload body to a released position for mounting of the second kind of payload body.

Hence, this invention contributes to an easy and user friendly change of the mechanical set-up for the two types of payload bodies. Furthermore, the invention shortens the load time significantly for the operator to switch between the two set-ups.

Above all, the carrier device is robust for misuse: if the carrier device is arranged to handle a swap body 20, however, accidentally a container 10 is loaded by a crane onto the vehicle 12, the foldable arms 38a, 38b for the guiding members 24a, 24b will be able to be forced in its released position, in particular due to the suspension in the pneumatic actuator 48a, 48b.

Furthermore, the carrier device 32 may be equipped with sensors, which are not illustrated in the figures for detection of the type of payload body. The information about the type of payload body going to be loaded may be used in a system to operate the technical side of the carrier device 32. If placing sensors that detect, whether the vehicle 12 is about to receive a swap body 20 or a container 10, a logical system could determine, if the guiding members 24a, 24b and/or the locking members 18a, 18b should be activated or not, i.e. whether the functional position of the foldable arms 38a, 38b need to be changed or not.

The input from the sensors can also be utilized to regulate the air suspension in order to control both, height and inclination of the trailer 16. Different heights of the legs 22 may thus be programmed for achieving a good starting point for loading and unloading a swap body 20 or similar. The guiding members 24a, 24b and/or the locking members 18a, 18b could be operated by a switch or with a system connected to the sensors.

The invention also relates to a mounting system comprising a carrier device 32 for a commercial vehicle 12, particularly a truck, a truck with a trailer or a semitrailer, for coupling different kinds of a payload bodies to the vehicle 12, wherein a not illustrated selecting device is coupled to the carrier device 32 for automatically bringing one or more locking members 18a, 18b for locking a first kind of the payload body 10 and/or a second kind of the payload body 20 and one or more guiding members 24a, 24b engageable with the second kind of payload body 20 into an engaging position and/or a released position depending on the kind of payload body to be coupled to the vehicle 12, wherein the one or more locking members 18a, 18b and the one or more guiding members 24a, 24b are integrated into a carrier-device body 34.

This present invention affects transport efficiency and working environment positively. Furthermore, the invention can provide an improved handling comfort for a driver of a truck carrying containers 10 as well as swap bodies 20.

## Claims

1. A carrier device (32) for a commercial vehicle (12), particularly a truck, a truck with a trailer or a semitrailer, for coupling different kinds of a payload body (10, 20) to the vehicle (12), wherein the carrier device (32) provides one or more locking members (18a, 18b) for locking a first kind of the payload body (10) and/or a second kind of the payload body (20);
- one or more guiding members (24a, 24b) engageable with the second kind of payload body (20), wherein the one or more locking members (18a, 18b) and the one or more guiding members (24a, 24b) are integrated in a device body (34);
- the one or more locking members (18a, 18b) and/or the one or more guiding members (24a, 24b) are automatically releasable into a released position and/or engageable into an engaging position depending on the kind payload body to be loaded or being coupled to the vehicle (12); and
- the one or more guiding members (24a, 24b) are switchable from an engaging position for engaging the second kind of payload body (20) to a released position for mounting the first kind of payload body (10) and the one or more locking members (18a, 18b) are switchable from an engaging position for engaging the first kind of payload body (10) and/or the second kind of payload body (20) to a released position for mounting of the second kind of payload body (20) whereby one of the one or more guiding members (24a, 24b) and one of the one or more locking members (18a, 18b) are arranged on a foldable arm (38a, 38b), which is selectively switchable to bring the guiding member (24) into its engaging/released position and the locking member (18a, 18b) into its engaging/released position **characterized in that** one or more sensors are provided for detecting the kind of payload body (10, 20) provided for coupling to the vehicle (12).

2. The carrier device according to claim 1, wherein the one or more locking members (18a, 18b) and/or the one or more guiding members (24a, 24b) are connected to one or more actuators (48a, 48b, 50) of at least one of hydraulic kind, pneumatic kind, electric kind, for moving the one or more locking members (18a, 18b) and/or the one or more guiding members (24a, 24b) between the engaging position and the released position.

3. The carrier device according to any preceding claim, wherein the one or more guiding members (24a, 24b) are positioned between the one or more locking members (18a, 18b) along a carrier-device body (34).

4. The carrier device according to any preceding claim, wherein the foldable arm (38a, 38b) provides an articulated joint (40a, 40b) between the one of the one or more guiding members (24a, 24b) and the one of the one or more locking members (18a, 18b).

5. The carrier device according to any preceding claim, wherein after mounting the second kind of payload body (20) the locking member (18a, 18b) is movable to its engaged position with the guiding member (24a, 24b) in its engaged position.

6. The carrier device according to any preceding claim, wherein the one or more locking members (18a, 18b) are provided for a locking container (10) and/or a swap body (20) and the one or more guiding members (24a, 24b) are provided for engaging with a swap body (20).

## Patentansprüche

1. Trägervorrichtung (32) für ein Nutzfahrzeug (2), insbesondere einen Lastwagen, einen Lastwagen mit einem Anhänger oder einem Sattelschlepper, zur Kopplung verschiedener Arten von Nutzlastkörpern (10, 20) an dem Fahrzeug (12), wobei die Trägervorrichtung (32) ein oder mehrere Verriegelungselemente (18a, 18b), um eine erste Art des Nutzlastkörpers (10) und/oder eine zweite Art des Nutzlastkörpers (20) zu verriegeln, und
- ein oder mehrere Führungselemente (24a, 24b) bereitstellt, die mit der zweiten Art von Nutzlastkörper (20) in Eingriff bringbar sind, wobei das eine oder die mehreren Verriegelungselemente (18a, 18b) und das eine oder die mehreren Führungselemente (24a, 24b) in einem Vorrichtungskörper (34) integriert sind,
- wobei das eine oder die mehreren Verriegelungselemente (18a, 18b) und/oder das eine oder die mehreren Führungselemente (24a, 24b) automatisch in eine Freigabeposition lösbar und/oder in eine Eingriffsposition in Eingriff bringbar sind, abhängig von der Art des zu ladenden oder mit dem Fahrzeug (12) gekoppelten Nutzlastkörpers, und
- wobei das eine oder die mehreren Führungselemente (24a, 24b) aus einer Eingriffsposition für ein Eingreifen an der zweiten Art des Nutzlastkörpers (20) in eine Freigabeposition zur Anbringung der ersten Art des Nutzlastkörpers (10) umschaltbar sind, und das eine oder die mehreren Verriegelungselemente (18a, 18b) aus einer Eingriffsposition für einen Eingriff an der ersten Art des Nutzlastkörpers (10) und/oder der zweiten Art des Nutzlastkörpers (20) in eine Freigabeposition zur Anbringung der zweiten Art des Nutzlastkörpers (20) umschaltbar sind, wobei eines des einen oder der mehreren Führungselemente (24a, 24b) und eines des einen oder der mehreren Verriegelungselemente (18a, 18b) auf einem klappbaren Arm (38a, 38b) angeordnet sind, der wahlweise schaltbar ist, um das Führungselement (24) in seine Eingriffs-/Freigabe-Position und das Verriegelungselement (18a, 18b) in seine Eingriffs-/Freigabe-Position zu bringen, **dadurch gekennzeichnet, dass** ein oder mehrere Sensoren vorgesehen sind, um die Art des Nutzlastkörpers (10, 20) zu erfassen, der für eine Kopplung an dem Fahrzeug (12) vorgesehen ist.

2. Trägervorrichtung nach Anspruch 1, bei der das eine oder die mehreren Verriegelungselemente (18a, 18b) und/oder das eine oder die mehreren Führungselemente (24a, 24b) mit einem oder mehreren Stellgliedern (48a, 48b, 50) von wenigstens einer von hydraulischer Art, pneumatischer Art, elektrischer Art sind, um das eine oder die mehreren Verriegelungselemente (18a, 18b) und/oder das eine oder die mehreren Führungselemente (24a, 24b) zwischen der Eingriffsposition und der Freigabeposition zu bewegen.

3. Trägervorrichtung nach irgendeinem vorhergehenden Anspruch, wobei das eine oder die mehreren Führungselemente (24a, 24b) zwischen dem einen oder den mehreren Verriegelungselementen (18a, 18b) entlang eines Trägervorrichtungskörpers (34) angeordnet sind.

4. Trägervorrichtung nach irgendeinem vorhergehenden Anspruch, wobei der klappbare Arm (38a, 38b) eine Gelenkverbindung (40a, 40b) zwischen dem einen oder den mehreren Führungselementen (24a, 24b) und dem einen oder den mehreren Verriegelungselementen (18a, 18b) bereitstellt.

5. Trägervorrichtung nach irgendeinem vorhergehenden Anspruch, wobei nach der Anbringung der zweiten Art von Nutzlastkörper (20) das Verriegelungselement (18a, 18b) in seine Eingriffsposition mit dem Führungselement (24a, 24b) in seiner Eingriffsposition bewegbar ist.

6. Trägervorrichtung nach irgendeinem vorhergehenden Anspruch, bei der das eine oder die mehreren Verriegelungselemente (18a, 18b) für einen Verriegelungscontainer (10) oder einen Wechselaufbau (20) vorgesehen sind und das eine oder die mehreren Führungselemente (24a, 24b) für einen Eingriff mit dem Wechselaufbau (20) vorgesehen sind.

## Revendications

1. Dispositif de support (32) pour un véhicule commercial (12), en particulier un camion, un camion ayant une remorque ou une semi-remorque, pour relier différents types de corps de charge utile (10, 20) au véhicule (12), le dispositif de support (32) fournissant un ou plusieurs éléments de verrouillage (18a, 18b) pour verrouiller un premier type de corps de charge utile (10) et/ou un second type de corps de charge utile (20);
- un ou plusieurs éléments de guidage (24a, 24b) pouvant venir en prise avec le second type de corps de charge utile (20), les éléments de verrouillage (18a, 18b) et les un ou plusieurs éléments de guidage (24a, 24b) étant intégrés dans un corps de dispositif (34);
- les un ou plusieurs éléments de verrouillage (18a, 18b) et/ou les un ou plusieurs éléments de guidage (24a, 24b) pouvant automatiquement être libérés dans une position relâchée et/ou être en prise dans une position de prise en fonction du type de corps de charge utile à charger ou relié au véhicule (12); et
- les un ou plusieurs éléments de guidage (24a, 24b) pouvant être commutés depuis une position de prise pour mettre en prise le second type de corps de charge utile (20) jusqu'à une position libérée pour le montage du premier type de corps de charge utile (10) et les un ou plusieurs éléments de verrouillage (18a, 18b) pouvant être commutés depuis une position en prise pour mettre en prise le premier type de corps de charge utile (10) et/ou le second type de corps de charge utile (20) jusqu'à une position libérée pour monter le second type de corps de charge utile (20) de sorte qu'un des un ou plusieurs éléments de guidage (24a, 24b) et un des un ou plusieurs éléments de verrouillage (18a, 18b) sont agencés sur un bras pliable (38a, 38b), qui peut être commuté sélectivement pour amener l'élément de guidage (24) dans sa position de prise/libérée et l'élément de verrouillage (18a, 18b) dans sa position de prise/libérée, **caractérisé en ce qu'**un ou plusieurs capteurs sont agencés pour détecter le type de corps de charge utile (10, 20) prévu pour être relié au véhicule (12).

2. Dispositif de support selon la revendication 1, dans lequel les un ou plusieurs éléments de verrouillage (18a, 18b) et/ou les un ou plusieurs éléments de guidage (24a, 24b) sont reliés à un ou plusieurs actionneurs (48a, 48b, 50) d'au moins un type parmi un type hydraulique, un type pneumatique, un type électrique, pour déplacer les un ou plusieurs éléments de verrouillage (18a, 18b) et/ou les un ou plusieurs éléments de guidage (24a, 24b) entre la position de prise et la position libérée.

3. Dispositif de support selon l'une quelconque des revendications précédentes, dans lequel les un ou plusieurs éléments de guidage (24a, 24b) sont positionnés entre les un ou plusieurs éléments de verrouillage (18a, 18b) le long d'un corps de dispositif de support (34).

4. Dispositif de support selon l'une quelconque des revendications précédentes, dans lequel le bras pliable (38a, 38b) fournit une liaison articulée (40a, 40b) entre le un des un ou plusieurs éléments de guidage (24a, 24b) et le un des un ou plusieurs éléments de verrouillage (18a, 18b).

5. Dispositif de support selon l'une quelconque des revendications précédentes, dans lequel, après montage du second type de corps de charge utile (20), l'élément de verrouillage (18a, 18b) est mobile vers sa position en prise avec l'élément de guidage (24a, 24b) dans sa position de prise.

6. Dispositif de support selon l'une quelconque des revendications précédentes, dans lequel les un ou plusieurs éléments de verrouillage (18a, 18b) sont fournis pour verrouiller un conteneur (10) et / ou une caisse mobile (20) et les un ou plusieurs éléments de guidage (24a, 24b) sont fournis pour venir en prise avec une caisse mobile (20).
